# EUROPÄISCHE PATENTSCHRIFT

(11) **EP 3 133 327 B1**
(45) Veröffentlichungstag und Bekanntmachung des Hinweises auf die Patenterteilung: **05.06.2019**
(21) Anmeldenummer: 16184248.9
(22) Anmeldetag: 16.08.2016
(51) Int. Cl.: F16L 3/24, F16B 5/02, F16L 3/20, F16L 3/127

(54) **BEFESTIGUNGSVORRICHTUNG**
ATTACHMENT DEVICE
DISPOSITIF DE FIXATION

(30) Priorität: 18.08.2015 DE 202015104369 U
(43) Veröffentlichungstag der Anmeldung: 22.02.2017
(73) Patentinhaber: Hückmann, Volker, 74354 Besigheim (DE)
(72) Erfinder: Hückmann, Volker, 74354 Besigheim (DE)
(74) Vertreter: Kohler Schmid Möbus Patentanwälte

(56) Entgegenhaltungen:
- DE-A1- 2 710 601
- DE-A1- 19 529 296
- DE-U1- 20 104 648
- US-B1- 6 209 926

## Beschreibung

Die Erfindung betrifft eine Befestigungsvorrichtung zum starren Befestigen eines Rohres in einer bestimmten Distanz zu einem festen Untergrund oder einer Montageschiene mit einer oder mehreren Rohrschellen zum Umklammern und starren Festhalten des Rohres, wobei die Rohrschellen jeweils einen Gewindeanschluss aufweisen und mittels Gewindebolzen oder Stockschrauben mit Abstand am Untergrund oder der Montageschiene befestigbar sind, wobei zwischen den Rohrschellen und den Gewindebolzen oder Stockschrauben ein Längen-variables Justageelement vorhanden ist, welches einerseits am Gewindeanschluss einer der Rohrschellen und andererseits an dem Gewindebolzen oder der Stockschraube aufschraubbar ist, wobei das Justageelement mindestens 2teilig aufgebaut ist, wobei ein erstes Teilstück des Justageelements direkt oder indirekt mit dem Gewindeanschluss der Rohrschelle und ein zweites Teilstück direkt oder indirekt mit dem Gewindebolzen oder der Stockschraube verschraubbar ist, wobei das erste Teilstück mit dem zweiten Teilstück drehbar verbunden ist, wobei das Justageelement aufgrund der Verdrehbarkeit des ersten Teilstücks gegen das zweite Teilstück mit unterschiedlichen Verschraubtiefen am Gewindebolzen oder der Stockschraube beziehungsweise am Gewindeanschluss der Rohrschelle befestigbar ist, und wobei mindestens ein Verschraub-Ende eines der beiden Teilstücke des Justageelements mit Außengewinde ausgeführt ist. Eine derartige Befestigungsvorrichtung ist bekannt aus der DE 201 04 648 U1.

### Technischer Hintergrund der Erfindung

Eine ähnliche Befestigungsvorrichtung ist beispielsweise auch bekannt aus der Internetseite der Firma Sikla http://www.sikla.de/service/downloads/publikationen/montagetechnik/mt-_-04-rohrschellen-und-zubehoer/48053, insbesondere Seiten 4.7 und 4.8.

Verbindungssysteme zur dauerhaften Befestigung von Rohren im Abstand von einem Untergrund oder einer Montageschiene oder -platte sind auch aus zahlreichen anderen Veröffentlichungen großer Hersteller bekannt,
etwa aus dem Internet-Katalog der Firma BTI http://www.bti.de/de/service/kataloge_brochueren_flyer.php unter B 070 Serie TOPPRO Seite 81-82
oder aus dem Internet-Katalog der Firma Hilti https://www.hilti.de/#/stage2/cls_instaitation_systems_foldout/ unter den Punkten "Schienensystem" und "Rohrschellen"
oder aus dem Internet-Katalog der Firma Müpro https://www.muepro.de/prod ukte/angebot/rohrschellen/rohrschellenproduktangebot.html Seite 3/6
oder aus den Internet-Katalogen der Firma Geberit http://www.geberit.de/flipbooks/plb_versorgungssysteme_1/index.html#/18/ Seite 40
oder http://www.geberit.ch/media/local_media/produkte/alle/montagehandbuch/mont agehandbuch_rls/de_5/9_Mapress_C_Stahl_Heizung.pdf Seite 374.

Ein Haupt-Nachteil aller dieser bisher bekannten Verbindungssysteme besteht darin, dass zwar die gewünschte Distanz des zu montierenden Rohres vom Untergrund oder einer Montageschiene beim Einbau einmal festgelegt werden kann. Ist dann aber das Rohr erst einmal montiert, wird für jegliche Veränderung des Abstands immer ein ziemlich großer Montage/Demontage-Aufwand erforderlich.

### Aufgabe der Erfindung

Der vorliegenden Erfindung liegt demgegenüber die Aufgabe zugrunde, eine Befestigungsvorrichtung der eingangs definierten Art mit möglichst simplen technischen Mitteln und wirtschaftlich preisgünstiger und noch einfacher bedienbar zu gestalten, wobei die Distanz zwischen dem Rohr und dem festen Untergrund oder der Montageschiene auch nach der Montage des Verbindungssystems problemlos jederzeit noch verändert, insbesondere nachjustiert werden kann, ohne dass die Rohrschellen erst wieder geöffnet werden müssen und ohne dass das Rohr umständlich demontiert werden muss.

### Kurze Beschreibung der Erfindung

Erfindungsgemäß wird diese -auf den ersten Blick vielleicht einfach klingende, aber bei genauerer Betrachtung doch relativ anspruchsvolle- Aufgabe auf ebenso überraschend einfache wie wirkungsvolle Art und Weise dadurch gelöst, dass das Teilstück des Justageelements mit dem Außengewinde eine Durchgangsbohrung aufweist, in der ein Längsbolzen um seine Achse drehbar befestigt ist, welcher anderenends starr mit dem anderen Teilstück des Justageelements verbunden ist, wobei das durch die Durchgangsbohrung ragende freie Ende des Längsbolzens gegen ein Herausrutschen des Längsbolzens aus der Durchgangsbohrung mechanisch gesichert ist, und dass der lichte Durchmesser der Durchgangsbohrung nur um weniges größer ist als der Außendurchmesser des Längsbolzens, so dass der Längsbolzen auch noch nach seinem Durchstecken durch die Durchgangsbohrung radial um seine Achse verdrehbar bleibt.

### Wirkungsweise der Erfindung und weitere Vorteile gegenüber dem Stand der Technik

Die vorliegende Erfindung schlägt also -technisch gesehen- vor, die bislang verwendete, nach der Montage -bewusst und gewollt- Distanz-starre Schraubverbindung zwischen den Rohrschellen und den Gewindebolzen oder Stockschrauben durch ein mindestens 2teilig aufgebautes, Längen-variables Justageelement zu ergänzen.

Der oben beschriebene, von der vorliegenden Erfindung vorgeschlagene spezielle Aufbau dieses Justageelements erlaubt es auch, jederzeit nach der Montage des Rohres mittels den Rohrschellen und den Gewindebolzen oder Stockschrauben im Abstand von einem Untergrund oder einer Montageschiene, diesen Abstand des montierten Rohres durch einfaches Betätigen des Justageelements zu verändern, anzupassen oder nachzujustieren. Dazu muss weder die Schraubverbindung zwischen den Rohrschellen und dem befestigten Rohr noch die Verbindung zwischen den Rohrschellen und den Gewindebolzen oder Stockschrauben gelöst werden.

Dieser Justage-Vorgang erfordert ansonsten mit einem der bekannten Verbindungssysteme einen relativ großen Arbeits- und meist auch noch Personal-Aufwand - etwa wenn große und schwere Rohre demontiert und dabei von mehreren Personen, mindestens aber einem weiteren Kollegen gehalten werden müssen. Diesen erheblichen Aufwand an Zeit, Mühe und damit auch an Kosten spart die vorliegende Erfindung ein, da lediglich ein Monteur mit einem geeigneten Hand-Werkzeug (meist reicht schon ein Schraubenschlüssel) durch Betätigung des Justageelements ganz allein, einfach und leicht die Distanz des bereits montierten Rohres verändern kann. Auf diese Weise können sich Einsparungen von 40% bis 60% der erforderlichen Arbeitszeit sowie außerdem auch noch die Einsparung von weiterem Arbeitspersonal zusätzlich zum Monteur ergeben.

Des Weiteren lassen sich bereits montierte Rohre -etwa bei späteren Reklamationen- ohne großen Aufwand und damit kostengünstig nachjustieren, so dass auch den Garantieverpflichtungen des Monteurbetriebs problemlos und schnell nachgekommen werden kann.

Aufgrund der Erfindung kann also mit einfachsten technischen Mitteln und daher kostengünstig die Montage-Effizienz eines einschlägigen Verbindungssystems ganz erheblich gesteigert werden, wobei im Wesentlichen nur normierte Standardteile Verwendung finden.

### Bevorzugte Ausführungsformen der Erfindung

Besonders bevorzugt sind Ausführungsformen, bei denen das durch die Durchgangsbohrung ragende freie Ende des Längsbolzens gegen ein Herausrutschen des Längsbolzens aus der Durchgangsbohrung durch eine Verbördelung oder Versplintung mechanisch gesichert ist. Hierdurch ergibt sich eine einfach und kostengünstig herstellbare drehbare Verbindung.

Bei einer ganz besonders vorteilhaften Variante weist das andere Teilstück des Justageelements, das ohne Außengewinde ausgeführt ist, ein Innengewinde auf, insbesondere zum Anschluss an den Gewindebolzen oder die Stockschraube. So erhält man die einfachste mögliche Schraubverbindung zu einem Gewindebolzen.

Besonders bevorzugt ist auch eine Klasse von Ausführungsformen der erfindungsgemäßen Befestigungsvorrichtung, die sich dadurch auszeichnen, dass mindestens ein Teilstück des Justageelements einen Abschnitt aufweist, der an seinem Außenumfang geometrisch so gestaltet ist, dass er mittels eines Gabelschlüssels, einer Zange oder eines anderen Greifwerkzeugs um die Längsachse des Justageelements verdreht werden kann. Damit ergibt sich eine besonders einfache Verstellbarkeit der gewünschten Distanzlänge von außen her.

Vorteilhaft sind Weiterbildungen dieser Ausführungsformen bei welchen der Außenumfang des Abschnitts zum Eingriff eines Greifwerkzeugs mit einer Schlüsselweite SW13, SW17, SW19 oder SW22 ausgestaltet ist. Dann kann der Installateur oder Monteur auf übliche Schlüsselweiten zurückgreifen und benötigt kein Spezial-Werkzeug mit "exotischen" Abmaßen.

Bei einer weiteren Klasse von besonders vorteilhaften Ausführungsformen ist das Justageelement mindestens 3teilig aufgebaut, wobei das zweite Teilstück ein als Gewindemuffe gestaltetes drittes Teilstück aufweist, das einerseits auf einen als Außengewinde gestalteten Abschnitt des zweiten Teilstücks und andererseits auf den am Untergrund oder der Montageschiene befestigten Gewindebolzen oder die Stockschraube aufschraubbar ist. Ein derartiges Justageelement ist einstückig herstellbar und in der Handhabung hoch-variabel. Besonders einfach in der Herstellung und daher ebenfalls bevorzugt ist schließlich auch eine Klasse von Ausführungsformen der Erfindung, bei denen der Gewindeanschluss der Rohrschelle als Gewindemuffe ausgeführt ist oder einen Außengewindeansatz aufweist, auf welchen eine Gewindemuffe aufgeschraubt werden kann, wobei die Gewindemuffe in beiden Fällen zum Aufschrauben auf den am Untergrund oder der Montageschiene befestigten Gewindebolzen oder die Stockschraube ausgestaltet ist. Derartige Rohrschellen sind nämlich handelsüblich erhältlich.

Vorteilhaft ist ein Justageelement zum Einsatz in einer Befestigungsvorrichtung der erfindungsgemäßen Art. Das Justageelement zeichnet sich dadurch aus, dass das Justageelement einerseits am Gewindeanschluss einer Rohrschelle und andererseits an einem Gewinde-bolzen oder einer Stockschraube aufschraubbar ist, dass das Justageelement Längen-variabel gestaltet ist, und dass das Justageelement mindestens 2teilig aufgebaut ist, wobei ein erstes Teilstück des Justageelements mit dem Gewindeanschluss der Rohrschelle und ein zweites Teilstück mit dem

Gewindebolzen oder der Stockschraube verschraubbar ist, wobei das erste Teilstück mit dem zweiten Teilstück drehbar verbunden ist, und wobei das Justageelement aufgrund der Verdrehbarkeit des ersten Teilstücks gegen das zweite Teilstück mit unterschiedlichen Verschraubtiefen am Gewindebolzen oder der Stockschraube beziehungsweise am Gewindeanschluss der Rohrschelle befestigbar ist. Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert.

### Es zeigen:

- Fig. 1: eine schematische Seitenansicht einer ersten Ausführungsform der erfindungsgemäßen Befestigungsvorrichtung;
- Fig. 2a: ein 2teiliges Justageelement einer Ausführungsform der Erfindung mit den beiden Teilstücken getrennt vor ihrer Zusammenführung in schematischem Vertikalschnitt;
- Fig. 2b: der Ausführungsform nach Fig. 2a mit den beiden Teilstücken in zusammengestecktem und verbördeltem Zustand; und
- Fig. 3: einen schematischen Vertikalschnitt durch eine Ausführungsform der erfindungsgemäßen Befestigungsvorrichtung mit 3teiligem Justageelement.

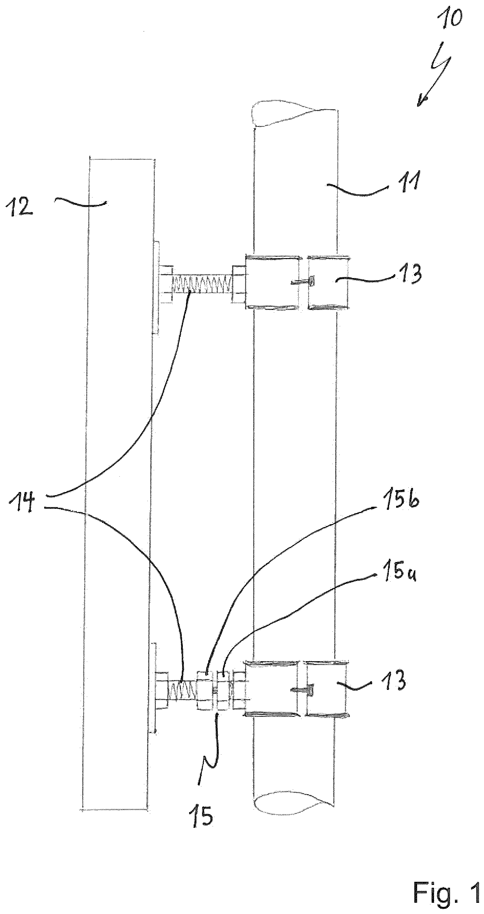

Die in den Figuren der Zeichnung schematisch im Detail dargestellten, unterschiedlich gestalteten Ausführungsformen der erfindungsgemäßen **Befestigungsvorrichtung 10** dienen zum starren Befestigen eines **Rohres 11** in einer bestimmten Distanz zu einem festen Untergrund oder einer **Montageschiene 12.** Die Befestigungsvorrichtung umfasst eine oder mehrere **Rohrschellen 13** zum Umklammern und starren Festhalten des Rohres 11, wobei die Rohrschellen 13 jeweils einen Gewindeanschluss aufweisen und mittels **Gewindebolzen 14** oder Stockschrauben mit Abstand am Untergrund oder der Montageschiene 12 befestigbar sind. Eine solche Anordnung ist in der Figur 1 dargestellt.

Üblicherweise ist der Gewindeanschluss der Rohrschelle 13 als Gewindemuffe ausgeführt oder besitzt einen Außengewindeansatz, auf welchen eine Gewindemuffe aufgeschraubt werden kann, wobei die Gewindemuffe in beiden Fällen zum Aufschrauben auf den am Untergrund oder der Montageschiene 12 befestigten Gewindebolzen 14 oder die Stockschraube ausgestaltet ist.

Die Ausführungsformen der erfindungsgemäßen Befestigungsvorrichtung 10 zeichnen sich jeweils dadurch aus, dass zwischen den Rohrschellen 13 und den Gewindebolzen 14 oder Stockschrauben ein mindestens 2teilig aufgebautes, Längen-variables **Justageelement 15; 25; 35** vorhanden ist, welches einerseits am Gewindeanschluss einer der Rohrschellen 13 und andererseits an einem Gewindebolzen 14 oder einer Stockschraube aufschraubbar ist, und dass ein **erstes Teilstück 15a; 25a; 35a** des Justageelements 15; 25; 35 direkt oder indirekt mit dem Gewindeanschluss der Rohrschelle 13 und ein **zweites Teilstück 15b; 25b; 35b** direkt oder indirekt mit dem Gewindebolzen 14 oder der Stockschraube verschraubbar ist, wobei das erste Teilstück 15a; 25a; 35a mit dem zweiten Teilstück 15b; 25b; 35b drehbar verbunden ist, und wobei das Justageelement 15; 25; 35 aufgrund der Verdrehbarkeit des ersten Teilstücks 15a; 25a; 35a gegen das zweite Teilstück 15b; 25b; 35b mit unterschiedlichen Verschraubtiefen am Gewindebolzen 14 oder der Stockschraube beziehungsweise am Gewindeanschluss der Rohrschelle 13 befestigbar ist.

Vorzugsweise ist mindestens ein Verschraub-Ende eines der beiden Teilstücke 15a; 25a; 35a bzw. 15b; 25b; 35b des Justageelements 15; 25; 35 mit **Außengewinde 25a'; 35a',35b'** ausgeführt.

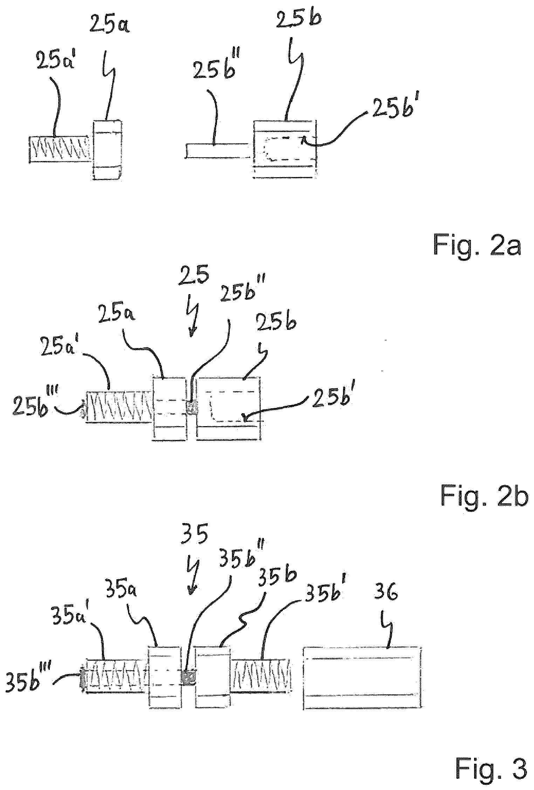

Bei den in den Figuren 2a bis 3 gezeigten Ausführungsformen des erfindungsgemäß eingesetzten Justageelements 25; 35 weist das Teilstück 25a; 35a mit dem Außengewinde 25a'; 35a' eine Durchgangsbohrung auf, in der ein **Längsbolzen 25b"; 35b"** um seine Achse drehbar befestigt ist, welcher anderenends starr mit dem anderen Teilstück 25b; 35b des Justageelements 25; 35 verbunden ist, wobei das durch die Durchgangsbohrung ragende freie Ende des Längsbolzens 25b"; 35b" gegen ein Herausrutschen des Längsbolzens 25b"; 35b" aus der Durchgangsbohrung mechanisch gesichert ist, vorzugsweise durch eine **Verbördelung 25b'''; 35b'''** oder-bei in der Zeichnung nicht eigens dargestellten Ausführungsformen - mittels Versplintung.

Der lichte Durchmesser der Durchgangsbohrung ist stets nur um weniges größer als der Außendurchmesser des Längsbolzens 25b"; 35b", so dass der Längsbolzen 25b"; 35b" auch noch nach seinem Durchstecken durch die Durchgangsbohrung radial um seine Achse verdrehbar bleibt.

Mindestens ein Teilstück 15a; 25a; 35a des Justageelements 15; 25; 35 weist einen Abschnitt auf, der an seinem Außenumfang geometrisch so gestaltet ist, dass er mittels eines Gabelschlüssels, einer Zange oder eines anderen Greifwerkzeugs um die Längsachse des Justageelements 15; 25; 35 verdreht werden kann.

Vorzugsweise ist der Außenumfang des Abschnitts zum Eingriff eines Greifwerkzeugs mit einer Schlüsselweite SW13, SW17, SW19 oder SW22 ausgestaltet. Die nachfolgende Tabelle zeigt typische Paarungen der Größen des Außengewindebolzens, des Bohrungsdurchmesser zum Durchstecken des Längsbolzens und der Schlüsselweite des zur Verdrehung mittels Werkzeug gestalteten Abschnitts am Außenumfang des entsprechenden Teilstücks des Justageelements:

| Außengewindebolzen | Bohrungsdurchmesser | Schlüsselweite |
|---|---|---|
| M8 | 4mm | SW13 |
| M10 | 5mm | SW 17 |
| M12 | 6mm | SW 19 |
| M14 | 7mm | SW 22 |

Die Figuren 2a und 2b zeigen eine Variante, bei welcher das zweite Teilstück 25b des Justageelements 25 kein Außengewinde, sondern ein **Innengewinde 25b'** aufweist, insbesondere zum Anschluss an den Gewindebolzen 14 oder eine -nicht dargestellte- Stockschraube.

In Figur 3 schließlich ist eine Ausführungsform der Erfindung dargestellt, bei welcher das Justageelement 35 mindestens 3teilig aufgebaut ist, wobei das zweite Teilstück 35b ein als Gewindemuffe gestaltetes **drittes Teilstück 36** aufweist, das einerseits auf einen als Außengewinde 35b' gestalteten Abschnitt des zweiten Teilstücks 35b und andererseits auf den am Untergrund oder der Montageschiene 12 befestigten Gewindebolzen 14 oder die Stockschraube aufschraubbar ist.

### Haupt-Anwendungsgebiet

Das erfindungsgemäße System mit seiner Befestigungsvorrichtung 10 wird in der Praxis vor allem zur Montage von Rohren an Wänden, etwa bei Heizungs- oder Sanitärinstallationen für die Zufuhr oder Ableitung von Wasser, eingesetzt.

### Bezugszeichenliste:

- 10: Befestigungsvorrichtung
- 11: Rohr
- 12: Montageschiene
- 13: Rohrschellen
- 14: Gewindebolzen
- 15; 25; 35: Justageelement
- 15a; 25a; 35a: erstes Teilstück
- 15b; 25b; 35b: zweites Teilstück
- 36: drittes Teilstück
- 25a'; 35a',35b': Außengewinde
- 25b': Innengewinde
- 25b"; 35b": Längsbolzen
- 25b'''; 35b''': Verbördelung

## Patentansprüche

1. Befestigungsvorrichtung (10) zum starren Befestigen eines Rohres (11) in einer bestimmten Distanz zu einem festen Untergrund oder einer Montageschiene (12) mit einer oder mehreren Rohrschellen (13) zum Umklammern und starren Festhalten des Rohres (11), wobei die Rohrschellen (13) jeweils einen Gewindeanschluss aufweisen und mittels Gewindebolzen (14) oder Stockschrauben mit Abstand am Untergrund oder der Montageschiene (12) befestigbar sind, wobei zwischen den Rohrschellen (13) und den Gewindebolzen (14) oder Stockschrauben ein mindestens 2teilig aufgebautes, Längen-variables Justageelement (15; 25; 35) vorhanden ist, welches einerseits am Gewindeanschluss einer der Rohrschellen (13) und andererseits an dem Gewindebolzen (14) oder der Stockschraube aufschraubbar ist, und wobei ein erstes Teilstück (15a; 25a; 35a) des Justageelements (15; 25; 35) direkt oder indirekt mit dem Gewindeanschluss der Rohrschelle (13) und ein zweites Teilstück (15b; 25b; 35b) des Justageelements (15; 25; 35) direkt oder indirekt mit dem Gewindebolzen (14) oder der Stockschraube verschraubbar ist, wobei das erste Teilstück (15a; 25a; 35a) mit dem zweiten Teilstück (15b; 25b; 35b) drehbar verbunden ist, wobei das Justageelement (15; 25; 35) aufgrund der Verdrehbarkeit des ersten Teilstücks (15a; 25a; 35a) gegen das zweite Teilstück (15b; 25b; 35b) mit unterschiedlichen Verschraubtiefen am Gewindebolzen (14) oder der Stockschraube beziehungsweise am Gewindeanschluss der Rohrschelle (13) befestigbar ist, und wobei mindestens ein Verschraub-Ende eines der beiden Teilstücke (15a; 25a; 35a bzw. 15b; 25b; 35b) des Justageelements (15; 25; 35) mit Außengewinde (25a'; 35a',35b') ausgeführt ist,
**dadurch gekennzeichnet,**
**dass** das Teilstück (25a; 35a) des Justageelements (25; 35) mit dem Außengewinde (25a'; 35a') eine Durchgangsbohrung aufweist, in der ein Längsbolzen (25b"; 35b") um seine Achse drehbar befestigt ist, welcher anderenends starr mit dem anderen Teilstück (25b; 35b) des Justageelements (25; 35) verbunden ist, wobei das durch die Durchgangsbohrung ragende freie Ende des Längsbolzens (25b"; 35b") gegen ein Herausrutschen des Längsbolzens (25b"; 35b") aus der Durchgangsbohrung mechanisch gesichert ist, und
**dass** der lichte Durchmesser der Durchgangsbohrung nur um weniges größer ist als der Außendurchmesser des Längsbolzens (25b"; 35b"), so dass der Längsbolzen (25b"; 35b") auch noch nach seinem Durchstecken durch die Durchgangsbohrung radial um seine Achse verdrehbar bleibt.

2. Befestigungsvorrichtung nach Anspruch 1, **dadurch gekennzeichnet, dass** das andere Teilstück (25b) des Justageelements (25), das ohne Außengewinde ausgeführt ist, ein Innengewinde (25b') aufweist, insbesondere zum Anschluss an den Gewindebolzen (14) oder die Stockschraube..

3. Befestigungsvorrichtung nach Anspruch 1 oder 2, **dadurch gekennzeichnet, dass** das durch die Durchgangsbohrung ragende freie Ende des Längsbolzens (25b"; 35b") gegen ein Herausrutschen des Längsbolzens (25b"; 35b") aus der Durchgangsbohrung durch eine Verbördelung (25b'''; 35b''') oder Versplintung mechanisch gesichert ist.

4. Befestigungsvorrichtung nach einem der vorhergehenden Ansprüche, **dadurch gekennzeichnet, dass** mindestens ein Teilstück (15a; 25a; 35a) des Justageelements (15; 25; 35) einen Abschnitt aufweist, der an seinem Außenumfang geometrisch so gestaltet ist, dass er mittels eines Gabelschlüssels, einer Zange oder eines anderen Greifwerkzeugs um die Längsachse des Justageelements (15; 25; 35) verdreht werden kann.

5. Befestigungsvorrichtung nach Anspruch 4, **dadurch gekennzeichnet, dass** der Außenumfang des Abschnitts zum Eingriff eines Greifwerkzeugs mit einer Schlüsselweite SW13, SW17, SW19 oder SW22 ausgestaltet ist.

6. Befestigungsvorrichtung nach einem der vorhergehenden Ansprüche, **dadurch gekennzeichnet, dass** das Justageelement (35) mindestens 3teilig aufgebaut ist, wobei das zweite Teilstück (35b) ein als Gewindemuffe gestaltetes drittes Teilstück (36) aufweist, das einerseits auf einen als Außengewinde (35b') gestalteten Abschnitt des zweiten Teilstücks (35b) und andererseits auf den am Untergrund oder der Montageschiene (12) befestigten Gewindebolzen (14) oder die Stockschraube aufschraubbar ist.

7. Befestigungsvorrichtung nach einem der vorhergehenden Ansprüche, **dadurch gekennzeichnet, dass** der Gewindeanschluss der Rohrschelle (13) als Gewindemuffe ausgeführt ist oder einen Außengewindeansatz aufweist, auf welchen eine Gewindemuffe aufgeschraubt werden kann, wobei die Gewindemuffe in beiden Fällen zum Aufschrauben auf den am Untergrund oder der Montageschiene (12) befestigten Gewindebolzen (14) oder die Stockschraube ausgestaltet ist.

## Claims

1. Fastening device (10) for rigidly fastening a pipe (11) at a certain distance from a solid ground or a mounting rail (12) with one or more pipe clamps (13) for clasping and rigidly holding the pipe (11), wherein the pipe clamps (13) each have a threaded connection and can be fastened at a distance on the ground or the mounting rail (12) by means of threaded bolts (14) or hanger bolts, wherein a length-adjustable adjusting element (15; 25; 35) which is formed of at least two pieces is provided between the pipe clamps (13) and the threaded bolts (14) or hanger bolts, and can be screwed to the threaded connection of one of the pipe clamps (13) and also to the threaded bolt (14) or the hanger bolt, and wherein a first part (15a; 25a; 35a) of the adjustment element (15; 25; 35) can be directly or indirectly screwed to the threaded connection of the pipe clamp (13) and a second part (15b; 25b; 35b) of the adjustment element (15; 25; 35) can be directly or indirectly screwed to the threaded bolt (14) or the hanger bolt, wherein the first part (15a; 25a; 35a) is rotatably connected to the second part (15b; 25b; 35b), wherein, due to the rotatability of the first part (15a; 25a; 35a) with respect to the second part (15b; 25b; 35b), the adjustment element (15; 25; 35) can be mounted with different screwing depths on the threaded bolt (14) or the hanger bolt or on the threaded connection of the pipe clamp (13) and wherein at least one screwing end of one of the two parts (15a; 25a; 35a or 15b; 25b; 35b) of the adjustment element (15; 25; 35) is designed with an outer thread (25a', 35a', 35b'),
**characterized in that**
the part (25a; 35a) of the adjustment element (25; 35) together with the outer thread (25a', 35a') comprises a through bore in which a longitudinal bolt (25b"; 35b") can be mounted to be rotatable about its axis, which at the other end is rigidly connected to the other part (25b; 35b) of the adjustment element (25; 35), wherein the free end of the longitudinal bolt (25"; 35b") that projects through the through bore is mechanically secured to prevent the longitudinal bolt (25b", 35b") from slipping out of the through bore, and
that the inside diameter of the through bore is only slightly larger than the outer diameter of the longitudinal bolt (25b", 35b") such that the longitudinal bolt (25b"; 35b") remains radially rotatable about its axis even after being inserted through the through bore.

2. Fastening device according to claim 1, **characterized in that** the other part (25b) of the adjustment element (25) which is designed without outer thread, has an inner thread (25b'), in particular for connection to the threaded bolt (14) or the hanger bolt.

3. Fastening device according to claim 1 or 2, **characterized in that** the free end of the longitudinal bolt (25b"; 35b") that projects through the through bore is mechanically secured to prevent the longitudinal bolt (25b"; 35b") from sliding out of the through bore by a crimp (25b''', 35b''') or cottering.

4. Fastening device according to any one of the preceding claims, **characterized in that** at least one part (15a; 25a; 35a) of the adjustment element (15; 25; 35) comprises a section, the outer periphery of which has a geometrical design such that it can be rotated about the longitudinal axis of the adjustment element (15; 25; 35) by means of an open-end wrench, nippers or another gripping tool.

5. Fastening device according to claim 4, **characterized in that** the outer periphery of the section is designed with a wrench size SW13, SW17, SW19 or SW22 for engagement of a gripping tool.

6. Fastening device according to any one of the preceding claims, **characterized in that** the adjusting element (35) is formed of at least three pieces, wherein the second part (35b) comprises a third part (36) which is designed as threaded sleeve and can be screwed onto a section of the second part (35b) designed as an outer thread (35b') and also onto a threaded bolt (14) mounted to the ground or the mounting rail (12) or the hanger bolt.

7. Fastening device according to any one of the preceding claims, **characterized in that** the threaded connection of the pipe clamp (13) is designed as a threaded sleeve or comprises an outer thread connection onto which a threaded sleeve can be screwed, wherein the threaded sleeve is in both cases designed for screwing onto the threaded bolt (14) mounted to the ground or the mounting rail (12) or onto the hanger bolt.

## Revendications

1. Dispositif de fixation (10) dévolu à la fixation rigide d'un tube (11) à une distance déterminée par rapport à une structure sous-jacente de consistance ferme, ou à un rail de montage (12), à l'aide d'un ou de plusieurs collier(s) de serrage (13) réalisé(s) pour enserrer et retenir rigidement ledit tube (11), les colliers de serrage (13) étant respectivement munis d'un rattachement fileté et pouvant être fixés à ladite structure sous-jacente ou audit un rail de montage (12), avec espacement, au moyen de boulons (14) ou de vis à filetage double, sachant qu'un élément d'ajustement (15 ; 25 ; 35) de longueur variable, composé d'au moins deux parties et présent entre lesdits colliers de serrage (13) et lesdits boulons (14) ou lesdites vis à filetage double, peut être rapporté par vissage sur le rattachement fileté de l'un des colliers de serrage (13), d'une part, et d'autre part sur le boulon (14) ou la vis à filetage double, sachant qu'une première pièce partielle (15a; 25a; 35a) de l'élément d'ajustement (15 ; 25 ; 35) peut être solidarisée par vissage avec le rattachement fileté dudit collier de serrage (13), directement ou indirectement, et qu'une deuxième pièce partielle (15b ; 25b; 35b) dudit élément d'ajustement (15 ; 25 ; 35) peut être solidarisée directement ou indirectement par vissage avec ledit boulon (14) ou ladite vis à filetage double, la première pièce partielle (15a ; 25a ; 35a) étant reliée de manière rotative à la deuxième pièce partielle (15b ; 25b ; 35b), sachant que, du fait de la faculté de rotation de ladite première pièce partielle (15a; 25a; 35a) vis-à-vis de ladite deuxième pièce partielle (15b ; 25b; 35b), ledit élément d'ajustement (15 ; 25 ; 35) peut être respectivement fixé, avec différentes profondeurs de vissage, audit boulon (14) ou à ladite vis à filetage double, ou bien audit rattachement fileté dudit collier de serrage (13), et sachant qu'un moins une extrémité de vissage de l'une des deux pièces partielles (15a ; 25a; 35a, respectivement 15b ; 25b ; 35b) dudit élément d'ajustement (15 ; 25 ; 35) est de réalisation pourvue d'un filetage extérieur (25a' ; 35a', 35b'),
**caractérisé par le fait**
**que** la pièce partielle (25a ; 35a) de l'élément d'ajustement (25 ; 35), pourvue du filetage extérieur (25a' ; 35a'), comporte un perçage traversant dans lequel une broche longitudinale (25b" ; 35b"), fixée de manière rotative autour de son axe, est reliée rigidement, par l'autre extrémité, à l'autre pièce partielle (25b; 35b) dudit élément d'ajustement (25; 35), sachant que l'extrémité libre de ladite broche longitudinale (25b" ; 35b"), qui franchit le perçage traversant, est arrêtée mécaniquement pour prévenir un ripage de ladite broche longitudinale (25b" ; 35b") hors dudit perçage traversant ; et par le fait que le diamètre intérieur du perçage traversant n'est que légèrement supérieur au diamètre extérieur de la broche longitudinale (25b" ; 35b"), de telle sorte que ladite broche longitudinale (25b" ; 35b") conserve sa faculté de rotation radiale, autour de son axe, également à l'issue de son emboîtement dans ledit perçage traversant.

2. Dispositif de fixation selon la revendication 1, **caractérisé par le fait que** l'autre pièce partielle (25b) de l'élément d'ajustement (25), de réalisation dépourvue de filetage extérieur, comporte un filetage intérieur (25b') notamment réalisé en vue du rattachement au boulon (14), ou à la vis à filetage double.

3. Dispositif de fixation selon la revendication 1 ou 2, **caractérisé par le fait que** l'extrémité libre de la broche longitudinale (25b" ; 35b") qui franchit le perçage traversant est arrêtée mécaniquement, au moyen d'un bordage (25b''' ; 35b''') ou d'un goupillage, pour prévenir un ripage de ladite broche longitudinale (25b" ; 35b") hors dudit perçage traversant.

4. Dispositif de fixation selon l'une des revendications précédentes, **caractérisé par le fait qu'**au moins une pièce partielle (15a; 25a; 35a) de l'élément d'ajustement (15 ; 25 ; 35) comporte une région dotée, sur son pourtour extérieur, d'une configuration géométrique permettant de lui imprimer des rotations, autour de l'axe longitudinal dudit élément d'ajustement (15 ; 25 ; 35), au moyen d'une clé plate, d'une pince ou d'un autre outil de préhension.

5. Dispositif de fixation selon la revendication 4, **caractérisé par le fait que** le pourtour extérieur de la région présente une largeur de clé SW13, SW17, SW19 ou SW22, en vue d'offrir une prise à un outil de préhension.

6. Dispositif de fixation selon l'une des revendications précédentes, **caractérisé par le fait que** l'élément d'ajustement (35) est composé d'au moins trois parties, la deuxième pièce partielle (35b) étant munie d'une troisième pièce partielle (36) qui revêt la forme d'un manchon taraudé et peut être rapportée par vissage, d'une part, sur une région de ladite deuxième pièce partielle (35b) configurée en un filetage extérieur (35b') et, d'autre part, sur le boulon (14) ou sur la vis à filetage double fixé(e) à la structure sous-jacente, ou au rail de montage (12).

7. Dispositif de fixation selon l'une des revendications précédentes, **caractérisé par le fait que** le rattachement fileté du collier de serrage (13) est réalisé sous la forme d'un manchon taraudé, ou est pourvu d'un appendice à filetage extérieur sur lequel un manchon taraudé peut être rapporté par vissage, lequel manchon taraudé est réalisé, dans les deux cas, pour être rapporté par vissage sur le boulon (14) ou sur la vis à filetage double fixé(e) à la structure sous-jacente, ou au rail de montage (12).
